# EUROPEAN PATENT SPECIFICATION

(11) **EP 0 535 343 B1**
(45) Date of publication and mention of the grant of the patent: **20.09.1995**
(21) Application number: 92113867.3
(22) Date of filing: 14.08.1992
(51) Int. Cl.: B23K 11/11

(54) **Spot welding apparatus and spot welding method**
Verfahren und Vorrichtung zum Punktschweissen
Procédé et appareil pour le soudage par points

(30) Priority: 01.10.1991 JP 253243/91
(43) Date of publication of application: 07.04.1993
(73) Proprietor: Hirane, Takasi, Tokyo (JP)
(72) Inventor: Hirane,Akio, Meguro-ku, Tokyo (JP)
(74) Representative: Einsel, Martin, Dipl.-Phys.

(56) References cited:
- US-A- 3 415 973
- US-A- 4 329 561
- US-E- 29 762
- PATENT ABSTRACTS OF JAPAN vol. 9, no. 60 (M-364)16 March 1985 & JP-A-59 193 773 (MITSUBISHI DENKI KK) 2 November 1984

## Description

### (Industrial Field of Utilization)

The present invention relates to a welding apparatus for spot-welding overlapped articles, at least one of which has a coating on its outer surface, and a spot welding method using said welding apparatus.

### (Prior Art)

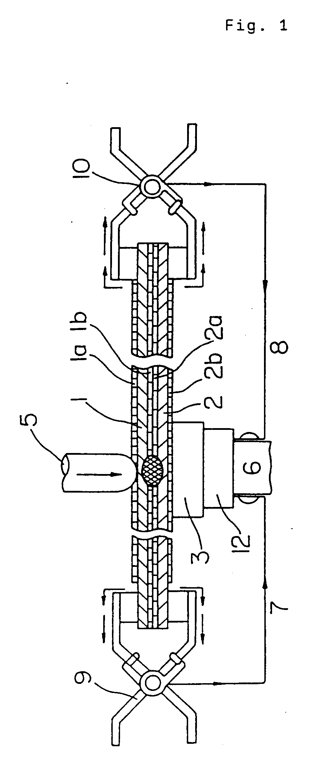

A spot welding process for spot welding articles 1 and 2 using a spot welding apparatus of this type as shown in Fig.1 is disclosed in the specification of U.S Patent Re.29,762, which process comprises placing a sheet metal panel 1 and a sheet metal panel 2 one upon the other, said sheet metal panel 1 having an upper coating 1a and a lower coating 1b, said sheet metal panel 2 having an upper coating 2a and a lower coating 2b; removing the coating 1a on the outer surface of the sheet metal panel 1 at a spot welding area; bringing a welding electrode tip 5, which is connected to an end of a cable connected to one pole of a welding power source, into contact with the thus coating-removed surface portion of said sheet metal panel 1; providing a cooling plate 3 onto a spot welding area of the other sheet metal panel in an opposed relation to the welding electrode tip 5; disposing a lower electrode 6 on the cooling plate 3 with an electrical insulator 12 interposed therebetween and applying a pressure by the welding electrode tip 5, providing two cables 7 and 8 so as to be led out from the lower electrode 6, electrically contact-connecting clamp-type contact members 9 and 10 connected respectively to the ends of the cables 7 and 8, to coating-removed portions of the sheet metal panels spaced apart from the spot welding area of said sheet metal panels, and supplying a welding current from the welding power source to perform a spot welding. In case of this process, however, the welding current flows from the welding electrode 5 to the electrode 6 through the article 1 to be welded and via the contact members 9 and 10 and the cables 7 and 8.For this reason, the spreading of the current from the spot welding area is increased, and hence, the heated region is widened, thus resulting in a reduced strength due to a change in properties of the welded articles. Moreover, this process is accompanied by the inconvenience that an incomplete spot welding may be often brought about.

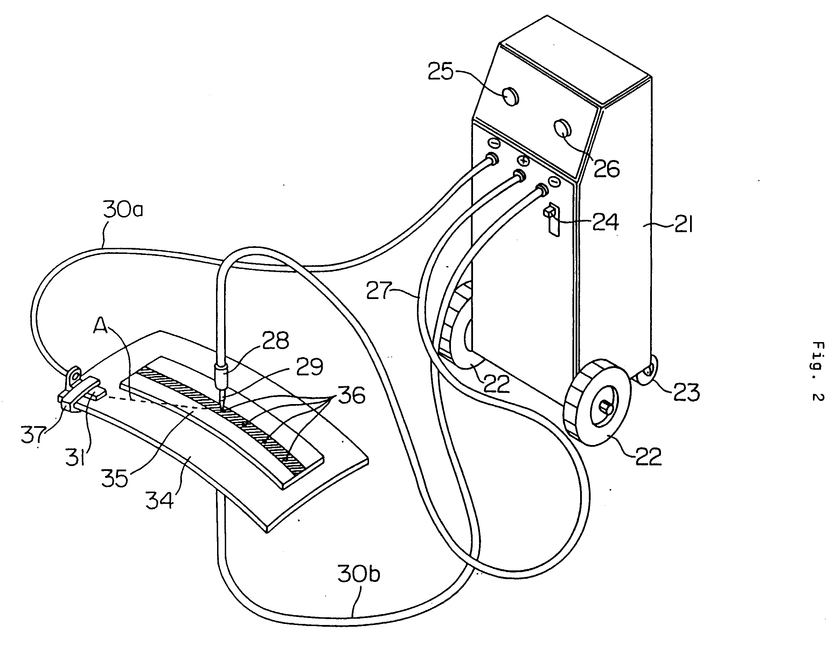

Fig.2 is a schematic diagram explaining the spot welding machine previously proposed by the present applicant (JP-A-4075785, published on 10.3.1992, corresponding to EP-A-456967, which falls under Art. 54(3) EPC).

Referring to Fig. 2, reference numeral 21 designates a substantially rectangular-parallelepiped-shaped welder body, which is provided in its lower portion with pairs of left and right large and small wheels 22 and 23, so that the welder body can be moved according to work conditions.

Externally of the welder body 21 are provided a main switch 24 for turning on and off a power source for the whole welder and adjusting knobs 25 and 26 for adjusting welding current, welding time and the like.

The welder body 21 is interiorly provided with a welding power source (not shown) comprising a transformer and a rectifier, which produces a DC or AC low voltage and a large current. In case the welding power source is, for example, for producing a DC current, the welding power source is provided at its output side with a plus side terminal and a minus side terminal, respectively.

A plus side cable 27 is electrically connected to the plus side terminal on the output side of the welding power source and drawn outside from the front side of the welder body 21.

A tip holder 28 is mounted on the extreme or leading end of the plus side cable 27, and a welding electrode tip 29 is mounted on the extreme end of the tip holder 28.

Minus side cables 30a and 30b are electrically connected to the minus side terminal on the output side of the welding power source and also drawn outside from the front side of the welder body 21.

A flat ground plate 31 is mounted on the extreme end of the minus side cable 30a drawn outside from the front side of the welder body 21.

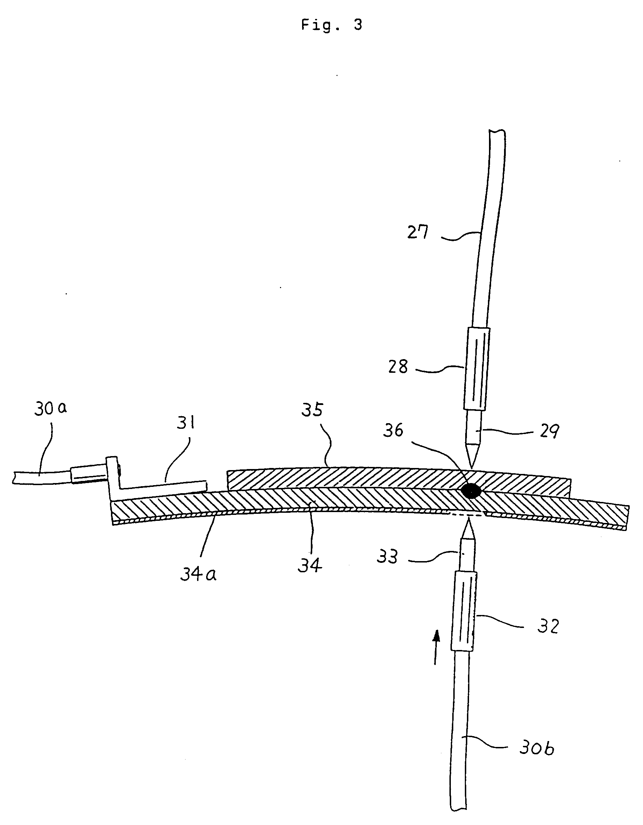

Fig.3 is a schematic sectional view explaining the welding process using the welding machine shown in Fig. 2. A welding electrode tip 33 is mounted on the leading end of the minus side cable 30b with a tip holder 32 interposed therebetween.

An example of the welding of articles 34 and 35 using the spot welding machine constructed in the above-described manner will be described below.

First, the opposed surfaces of the articles to be welded 34 and 35 are partly abraded or ground by a sander or the like so as to electrically conduct at any place and then stacked.

At least a region (shown by oblique lines), including points 36 to be spot welded of the upper surface of the upper article 35, is also abraded by the sander or the like, so that the metal surface is exposed.

Then, the ground plate 31 mounted on the leading end of the minus side cable 30a is brought into close contact with a predetermined region of the lower article 34 by use of a clamp 37.

Next, the points 36 to be welded of the articles 34 and 35 are each sandwiched by and between the welding electrode tip 33 connected to the other minus side cable 30b and the welding electrode tip 29 connected to the plus side cable 27. The welding electrode tip 33 is positioned on the surface of the coating 34a, because the coating 34a remains deposited on the lower surface of the article to be welded 34.

Subsequently, welding current and welding time (0.3 - 0.4 minutes) are set by adjusting knobs 25 and 26, and the main switch 24 on the welder body 21 is turned on to apply current.

By so doing, the points 36 to be welded are heated by the current flowing between the ground plate 31 connected to the article 34 and the points 36, as shown by a broken line in Fig. 2, so that the coating 34a or the like coated on the back of this region is softened, evaporated or melted, thereby causing the welding electrode tip 33 to be brought into contact and, accordingly, electrical connection with the metal surface.

In this state, the resistance between the welding electrode tips 29 and 33 is smaller than the resistance R between the welding electrode tip 29 and the ground plate 31. Therefore, a large current flows between the welding electrode tips 29 and 33 in a short period of time to provide a firm spot welded zone.

### Problem to be Solved by the Invention

In case of this process, however, even after the current started to flow between the welding electrode tips 29 and 33, the welding current keeps flowing from the welding electrode tip 29 via the spot welding points 36 to the ground plate 31 to diffuse outwardly from the spot welded zone, so that the welding current between the two welding electrode tips becomes insufficient, thus resulting in an incomplete welding. There is also the disadvantage that the welding time and the welding current are difficult to adjust, and if the welding time is too long, the welding area is perforated. A further disadvantage is that a large amount of heat is generated in a region surrounding the welding area, and thus, a correspondingly increased annealed portion is produced near said region, resulting in a reduced strength of the welded articles and in a difficulty to realize a welding of a homogeneous quality.

The object or purpose of the present invention is to give solutions to the above-described problems, that is, to suppress the generation of a heat in a large extent in the vicinity of the spot welding area, to prevent a reduction in strength of the welded articles and to allow a uniform and complete welding in each of spot welding points.

### Means to Solve the Problem

To achieve the above Object or purpose, according to the present invention, there is provided a spot welding apparatus comprising a welding power source; a cable drawn from one pole of said welding power source; a first welding electrode tip connected to an end of said cable; at least two cables connected the other pole of said power source; a contact member provided at an end of one of said cables, said contact member contact-connecting to portions of metal-exposed surfaces of the articles to be welded which portions are spaced apart from a spot welding area of the overlapped articles to be welded; a second welding electrode tip connected to an end of the other of said two cables; means for detecting the current flowing to said second welding electrode tip; and a device for cutting off the current flowing to said contact member in accordance with the output from said current detecting means.

Further, according to the present invention, there is provided a spot welding method for achieving the above-mentioned object, said method comprising the steps of electrically connecting by contact a first welding electrode tip, which is connected to an end of a cable drawn from one pole of a welding power source, to an upper surface in a spot welding area of one of overlapped first and second articles to be welded; pressing a second welding electrode tip, which is connected to an end of one of two cables connected to the other pole of said power source against a coating on the outer surface of the other article in an opposed relation to the first welding electrode tip; electrically contact-connecting a contact member to portions of metal exposed surfaces of the articles which portions are spaced apart from the spot welding area, said contact member being provided at an end of the other of said two cables connected to the other pole of said power source; supplying a current from said welding power source so as to flow between said first welding electrode tip and said contact member; detecting the current flow between said first and second welding electrode tips; and cutting off the current flowing between said first welding electrode tip and said contact member in accordance with the result of detection of the current flow between said first and second welding electrode tips.

### Working of the Invention

According to the present invention, a first welding electrode tip connected to an end of a cable drawn from one pole of a welding power source, is electrically connected by contact to that metal portion of the upper surface of a spot welding area of one of overlapped articles to be welded which metal portion is exposed by abrasion or the like, and a second welding electrode tip connected to the end of one of the two cables connected to the other pole of the welding power source is brought into contact with the coating on the outer surface of the other article in an opposed relation to the first welding electrode tip. The contact member mounted on the end of the other of the two cables is connected by contact to metal- exposed regions spaced apart from the spot welding area of the articles to be welded. In this condition, first a current is supplied from the welding power source so as to flow between the first welding electrode tip and the contact member, thus causing the lower portion of the first welding electrode tip to be heated to thereby soften, melt or evaporate the coating or the like on the outer surface of the other article lying beneath said first welding electrode tip. This causes the second welding electrode tip pressed against the outer surface of the coating to be brought into contact and, accordingly, electric connection with the thus exposed metal surface of said other article to be welded, so that the current flows from the first welding electrode tip to the second welding electrode tip. When this current flowing to the second welding electrode tip is detected, the current flowing from the first welding electrode tip to the contact member is cut off in accordance with the signal resulting from the such detection, thereby permitting the main welding current to flow in an small extent of the spot welding area between the first and second welding electrode tips. Therefore, surrounding heat-emitting area or volume is reduced, resulting in a reduction in electric power loss, and at the same time, any change or deterioration in quality of the spot weld due to the change in distance between the first welding electrode tip and the contact member is prevented. In addition, the main spot welding is conducted by the current flowing between the first and second welding electrode tips, and therefore, the welding can be carried out firmly under the same condition by setting the electric energization time.

### Brief Description of the Drawings

Fig.1 is a schematic sectional view explaining a welding method using a known spot welding apparatus;
Fig.2 is a perspective view of the spot welding apparatus previously proposed by the present applicant;
Fig.3 is a schematic sectional view explaining the welding method using the spot welding apparatus shown in Fig.2;
Fig.4 is a schematic circuit diagram explaining the welding method using a spot welding apparatus according to the present invention; and
Fig.5 is a schematic circuit diagram explaining the welding method using a further spot welding apparatus according to the present invention.

### Embodiments

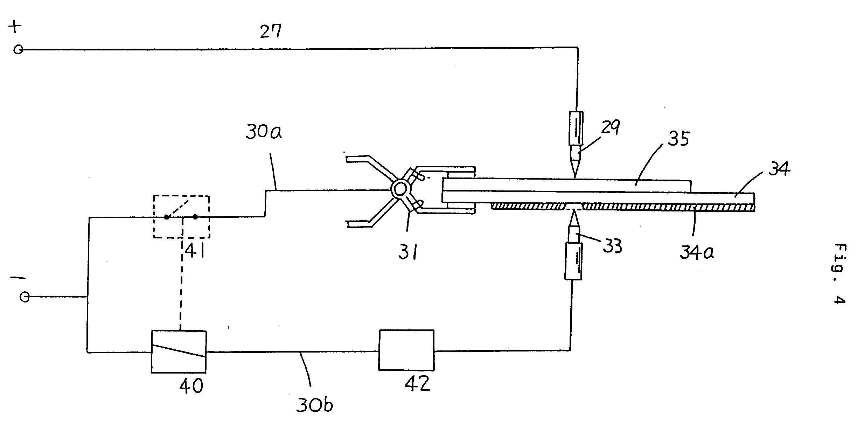

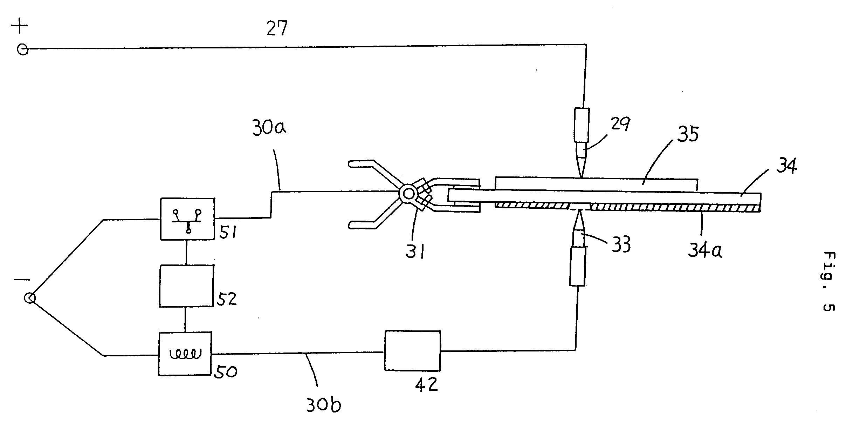

Embodiments of the present invention will now be described by reference to Figs. 4 and 5, wherein the parts or components corresponding to those shown in Figs. 2 and 3 are designated by the like reference numerals and fulfil the like functions.

Referring to Fig.4, a plus cable 27 is connected to a plus terminal of a welding power source, and a first welding electrode tip 29 is attached to an end of the cable 27 and electrically connected, by pressure contact, to a metal exposed surface of an article to be welded 35. It should be noted that, if there is a coating such as a paint coating not only on that inner side of the article which (inner side) is to be welded, but also on that outer side of said article which is to be connected by contact to the welding electrode tip, such coatings must be previously removed. Cables 30a and 30b are separately connected to minus terminals of the welding power source, or a cable diverged midway into two branch cables 30a and 30b is connected to a minus side terminal of the welding power source. A contact clamper 31 is connected to the leading end of the cable 30a and connected by contact to a metal-exposed portion of at least one of the articles 34 and 35 at a point relatively far from the spot welding area. A second welding electrode tip 33 is attached to the leading end of the other cable 30b and pressed against a coating 34a on the article 34 in an opposed relation to the first welding electrode tip 29 with two articles interposed therebetween. A relay coil 40 is provided in the electric current path of the cable 30b, and a contact 41 operatively associated with the relay coil 40 is provided in the electric current path of the cable 30a.

A preheating current flows from the plus pole of the welding power source to the minus pole of the welding power source via the cable 27 and the first welding electrode tip 29, the article 35 or 34 or the articles 35 and 34 and the contact clamper 31 and further via the cable 30a as well as the normally closed contact 41. Due to this preheating current, a region near the point at which the first welding electrode tip is press-contacted with the article is made to heat. The thus produced heat softens, melts or evaporates the coating such as a paint coating on the portion of the article 34 with which the second welding electrode tip 33 is in contact. Thus, when the second welding electrode tip 33 is brought into contact and, accordingly, electrical connection with the metal surface of the article 34, the current flows through a relay coil 40 provided in the current path leading to the second welding electrode tip 33, so that the relay coil 40 is energized to cause the associated contact 41 to be opened to a position as shown by a broken line. As a result, the welding current flows through only between the first and second welding electrode tip 29 and 33. Here, it should be noted that a timing circuit 42 comprising, e.g. a time switch is provided in the current path of the second welding electrode tip 33 in order to ensure that this current used for the main welding flows only for a predetermined period of time. Therefore, the main welding time can always be kept constant by adjusting the setting of the energization time of the timing circuit, thereby effecting a uniform and firm welding with a high efficiency. During this main welding process, no preheating current flows due to the opening of the contact 41, and hence, the area or volume of the heated region spreading from the main spot welding area can be minimized, thus resulting in a reduction in electric power loss.

In the further embodiment shown in Fig.5, a current detecting coil 50 is provided around the cable 30b for detecting the current in the current path of the cable 30b, so that, after the output from said current detecting coil 50 is amplified and processed in a control circuit 52, a switching transistor 51 provided in the current path of the cable 30a is turned off. The switching transistor 51 can be comprised of a bi-polar power transistor, a power MOSFET or an electrostatic induction type transistor. Further, in place of the switching transistor, a semiconductor switch such as a thyristor, a GTO thyristor, or an electrostatic induction type thyristor can alternatively be used.

In addition, as the current detecting means, a current transformer may be connected in the current path of the cable 30b, so that the secondary coil current thereof is processed by the control circuit so as to control the gate of a thyristor or the base of a transistor. Still, alternatively, a Hall element may be used as the current detecting means.

Although the number of the cables connected to the minus pole of the welding power source is two in the above-described embodiments, the apparatus can alternatively be constructed such that the cable 27 is connected to the minus side of the welding power source, and the cables 30a and 30b are connected to the plus side of the welding power source. Moreover, AC power source may be employed as the welding power source, in which case the cable 27 is connected to one terminal of the AC power source, while the cables 30a and 30b are connected to the other terminal.

### Effects of the Invention

According to the present invention, the welding current first flows between the first welding electrode tip and the contact member through the articles to be welded, so that the region near the area where the first welding electrode tip is contacted with the article to be welded is preheated, thereby causing the solftening, melting or evaporation of the coating such as a paint coating on the article with which the second welding electrode tip opposed to the first welding electrode tip is in contact. As a result, the second welding electrode tip is brought into contact and, accordingly, electrical connection with said article, so that the current starts to flow between the first and second welding electrode tips, whereupon the current flowing between the first welding electrode tip and the contact member is cut off, and thus, the main welding is performed between the first and second articles. This provides the effect of narrowing the heated region and the effect of assuring a homogeneous quality of the welds, a reduction in electric power loss and an increased welding capability.

### Description of the Reference Numerals

3 --- cooling plate 5 --- welding electrode tip 6 --- lower electrode 9 --- contact member 10 --- contact member 12 --- electrical insulator 21 --- welder body 29 --- welding electrode tip 33 --- welding electrode tip 34 --- article to be welded 35 --- article to be welded 40 --- relay coil 41 --- contact 42 --- timing circuit 50 --- current detecting coil 51 --- switch transistor 52 --- control circuit.

## Claims

1. A spot welding apparatus comprising
a welding power source;
a cable (27) drawn from one pole of said welding power source;
a first welding electrode tip (29) connected to an end of said cable;
at least two cables (30a, 30b) connected to the other pole of said power source;
a contact member (31) provided at an end of one (30a) of said cables so as to electrically connect by contact to portions of the metal-exposed surfaces of articles (34, 35) to be welded, said articles to be welded being placed in an overlapped state, said surface portions being spaced apart from a spot welding area;
a second welding electrode tip (33) connected to an end of the other (30b) of said two cables;
means (40) for detecting the current flowing through said second welding electrode tip (33); and
a device (41) for cutting off the current flowing to said contact member (31) in accordance with the output from said current detecting means (40).

2. The spot welding apparatus according to claim 1, wherein said current detecting means is a relay coil (40) inserted into the current path leading to said second welding electrode tip (33), and said current cutting-off device is a contact (41) for said relay coil.

3. The spot welding apparatus according to claim 1, wherein said current detecting means is a coil (50) provided around said other cable (30b), and the output from said coil is used for turning off a switch device (51) through a control circuit (52), said switch device being provided in the current path leading to the contact member (31) so as to serve as the current-off device.

4. The spot welding apparatus according to claim 1, wherein said current detecting device is a Hall element, the output of which is used to turn off the cutting-off device (51) through a control circuit (52).

5. The spot welding apparatus according to claim 1, wherein said cutting-off device (51) is a semiconductor switch such as a bi-polar power transistor, a power MOSFET, a thyristor, a GTO thyristor, an electrostatic induction type transistor, an electrostatic induction type thyristor or the like.

6. The spot welding apparatus according to claim 1, wherein a timing circuit (42) is provided in the current path leading to said second welding electrode tip (33), so that the welding current can be adjusted.

7. A spot welding method comprising the steps of
(a) contact-connecting a first welding electrode tip (29), which is connected to an end of a cable (27) drawn from one pole of a welding power source, to an upper surface in a spot welding area of one of overlapped first and second articles (34, 35) to be welded;
(b) pressing a second welding electrode tip (33) against a coating (34a) on the outer surface of the other article in a state facing the first welding electrode tip (29), said second welding electrode tip (33) being connected to an end of one (30b) of two cables connected to the other pole of said power source;
(c) contact-connecting a contact member (31), which is provided at an end of the other (30a) of said two cables connected to said other pole, to portions of metal-exposed exposed surfaces of the articles which portions are spaced apart from the spot welding area;
(d) supplying a current from said welding power source so as to flow between said first welding electrode tip (29) and said contact member (31);
(e) detecting the current flow between said first and second welding electrode tips (29, 33); and
(f) cutting off the current flowing between said first welding electrode tip (29) and said contact member (31) on the basis of the result of detection of the current flow between said first and second welding electrode tips (29, 33).

## Patentansprüche

1. Eine Punktschweißvorrichtung aufweisend
eine Schweißstromquelle;
ein von einem Pol besagter Schweißstromquelle gezogenes Leitungskabel (27);
eine mit einem Ende besagten Leitungskabels verbundene erste Schweißelektrodenspitze (29);
mindestens zwei mit dem anderen Pol besagter Stromquelle verbundene Leitungskabel (30a, 30b);
ein an einem Ende eines (30a) der besagten Leitungskabel zur Verfügung gestelltes Kontaktglied (31), um durch Kontakt mit Teilen der metallischblanken Oberflächen von zu schweißenden Gegenständen (34,35) elektrisch zu verbinden, besagte zu schweißende Gegenstände sind in einen überlappten Zustand gelegt, besagte Oberflächenteile sind von einer Punktschweißzone beabstandet;
eine mit einem Ende des anderen (30b) von besagten zwei Leitungskabeln verbundene zweite Schweißelektrodenspitze (33);
Mittel (40) zur Wahrnehmung des durch besagte zweite Elektrodenspitze (33) fließenden Stroms; und
ein Bauelement (41) zum Abschalten des zu besagtem Kontaktglied (31) fließenden Stromes entsprechend dem Ausgang von besagtem Stromwahrnehmungsmittel (40).

2. Die Punktschweißvorrichtung nach Anspruch 1, worin besagtes Stromwahrnehmungsmittel eine in den zu besagter zweiter Schweißelektrodenspitze (33) führenden Stromweg eingefügte Relaisspule (40) ist, und besagtes Stromabschaltbauelement ist ein Schaltstück (41) für besagte Relaisspule.

3. Die Punktschweißvorrichtung nach Anspruch 1, worin besagtes Stromwahrnehmungsmittel eine um besagtes anderes Leitungskabel (30b) herum zur Verfügung gestellte Spule (50) ist, und der Ausgang von besagter Spule wird verwendet zum Ausschalten eines Schaltbauelementes (51) durch einen Steuerstromkreis (52), besagtes Schaltbauelement ist in dem zu dem Kontaktglied (31) führenden Stromweg zur Verfügung gestellt, um als das Strom-Aus-Bauelement zu dienen.

4. Die Punktschweißvorrichtung nach Anspruch 1, worin besagtes Stromwahrnehmungsbauelement ein Hall-Element ist, dessen Ausgang verwendet wird, um das Abschaltbauelement (51) durch einen Steuerstromkreis (52) auszuschalten.

5. Die Punktschweißvorrichtung nach Anspruch 1, worin besagtes Abschaltbauelement (51) ein Halbleiterschalter ist, wie z.B. ein Bipolarleistungstransistor, ein Leistungs-MOSFET, ein Thyristor, ein GTO-Thyristor, ein elektrostatischer Induktionstransistor, ein elektrostatischer Induktionsthyristor oder dergleichen.

6. Die Punktschweißvorrichtung nach Anspruch 1, worin eine Zeitsteuerungsschaltung (42) in dem zu besagter zweiten Schweißelektrodenspitze (33) führenden Stromweg zur Verfügung gestellt ist, so daß der Schweißstrom eingestellt werden kann.

7. Ein Punktschweißverfahren aufweisend die Schritte des
a) Kontakt-Verbindens einer ersten Schweißelektrodenspitze (29), welche miteinem Ende eines von einem Pol einer Schweißstromquelle gezogenen Leitungskabels (27) verbunden ist, mit einer oberen Oberfläche in einer Punktschweißzone von einem von überlappten ersten und zweiten zu schweißenden Gegenständen (34,35);
b) Pressens einer zweiten Schweißelektrodenspitze (33) gegen eine Beschichtung (34a) auf der äußeren Oberfläche des anderen Gegenstandes in einem der ersten Schweißelektrodenspitze (29) gegenüberliegenden Zustand, besagte zweite Schweißelektrodenspitze (33) ist verbunden mit einem Ende von einem (30b) von zwei mit dem anderen Pol besagter Stromquelle verbundenen Leitungskabeln;
c) Kontakt-Verbindens eines Kontaktgliedes (31), welches an einem Ende des anderen (30a) von besagten zwei mit besagtem anderen Pol verbundenen Leitungskabeln zur Verfügung gestellt ist, mit Teilen von metallischblanken ungeschützten Oberflächen der Gegenstände, welche Teile von der Punktschweißzone beabstandet sind;
d) Lieferns eines Stromes von besagter Schweißstromquelle, um zwischen besagter ersten Schweißelektrodenspitze (29) und besagtem Kontaktglied (31) zu fließen;
e) Wahrnehmens des Stromflusses zwischen besagten ersten und zweiten Schweißelektrodenspitzen (29,33); und
f) Abschaltens des zwischen besagter ersten Schweißelektrodenspitze (29) und besagtem Kontaktglied (31) fließenden Stromes auf der Grundlage des Wahrnehmungsergebnisses des Stromflusses zwischen besagten ersten und zweiten Schweißelektrodenspitzen (29,33).

## Revendications

1. Appareil pour le soudage par points comprenant :
- une source de puissance pour le soudage ;
- un câble (27) amené depuis un pôle de ladite source de puissance pour le soudage ;
- une première pointe d'électrode pour le soudage (29) reliée à une extrémité dudit câble ;
- au moins deux câbles (30a, 30b) reliés à l'autre pôle de ladite source de puissance ;
- un élément de contact (31) disposé sur une extrémité de l'un (30a) desdits câbles de manière à être connecté électriquement par contact à des portions de surfaces métalliques exposées des articles (34, 35) devant être soudés, lesdits articles devant être soudés étant placés dans un état de chevauchement, lesdites portions de surface étant espacées d'une zone de soudage par points ;
- une seconde pointe d'électrode pour le soudage (33) reliée à une extrémité de l'autre (30b) desdits deux câbles ;
- des moyens (40) destinés à détecter le courant se propageant à travers ladite seconde pointe d'électrode pour le soudage (33) ; et
- un dispositif (41) destiné à couper le courant se propageant vers ledit élément de contact (31) en fonction de la sortie depuis lesdits moyens de détection (40).

2. Appareil pour le soudage par points selon la revendication 1, dans lequel lesdits moyens de détection sont une bobine de relais (40) insérée dans la trajectoire du courant menant vers ladite seconde pointe d'électrode pour le soudage (33), et ledit dispositif destiné à couper le courant est un contact (41) pour ladite bobine de relais.

3. Appareil pour le soudage par points selon la revendication 1, dans lequel lesdits moyens de détection du courant sont une bobine (50) disposée autour dudit autre câble (30b), et la sortie de ladite bobine est utilisée pour éteindre un dispositif de commutateur (51) au moyen d'un circuit de commande (52), ledit dispositif de commutateur étant disposé dans la trajectoire du courant menant à l'élément de contact ( 31) de manière à servir de dispositif de coupure du courant.

4. Appareil pour le soudage par points selon la revendication 1, dans lequel le dispositif de détection du courant est un élément de Hall, dont la sortie est utilisée pour éteindre le dispositif de coupure du courant (51) au moyen d'un circuit de commande (52).

5. Appareil pour le soudage par points selon la revendication 1, dans lequel le dispositif de détection du courant (51) est un commutateur à semi-conducteur tel qu'un transistor de puissance bipolaire, un transistor MOS à effet de champ, un thyristor, un thyristor blocable, un transistor de type à induction électrostatique, un thyristor de type à induction électrostatique ou analogues.

6. Appareil pour le soudage par points selon la revendication 1, dans lequel un circuit de synchronisation (42) est disposé dans la trajectoire du courant menant à ladite seconde pointe d'électrode pour le soudage (33), de sorte que le courant de soudage peut être réglé.

7. Procédé pour le soudage par points comprenant les étapes consistant à:
(a) relier par contact une première pointe d'électrode pour le soudage (29), qui est connectée à une extrémité d'un câble (27) amené depuis un pôle d'une source de puissance pour le soudage vers une surface supérieure dans une zone de soudage par points de l'un des premier et second articles (34, 35) se chevauchant devant être soudés ;
(b) presser une seconde pointe d'électrode pour le soudage (33) contre un revêtement (34a) sur la surface externe de l'autre article en relation opposée à la première pointe d'électrode pour le soudage (29), ladite seconde pointe d'électrode pour le soudage (33) étant reliée à une extrémité (30b) de l'un des deux câbles reliés à l'autre pôle de ladite source de puissance ;
(c) relier par contact un élément de contact (31) qui est placé en une extrémité de l'autre (30a) desdits deux câbles reliés à l'autre pôle, à des portions de surfaces métalliques exposées des articles dont les portions sont espacées de la zone de soudage par points ;
(d) fournir un courant depuis ladite source de puissance pour le soudage qui se propage entre ladite première pointe d'électrode pour le soudage (29) et ledit élément de contact (31) ;
(e) détecter la propagation du courant entre lesdites première et seconde pointes d'électrode pour le soudage (29, 33) ; et
(f) couper le courant se propageant entre ladite première pointe d'électrode pour le soudage (29) et ledit élément de contact (31) en fonction du résultat de la détection de la propagation du courant entre lesdites première et seconde pointes d'électrode pour le soudage (29, 33).
